# EUROPÄISCHE PATENTSCHRIFT

(11) **EP 1 671 020 B1**
(45) Veröffentlichungstag und Bekanntmachung des Hinweises auf die Patenterteilung: **14.04.2010**
(21) Anmeldenummer: 04765679.8
(22) Anmeldetag: 29.09.2004
(51) Int. Cl.: F02B 29/04, F28F 27/02

(54) **LADELUFTKÜHLER EINES KRAFTFAHRZEUGES**
CHARGE INTERCOOLER FOR A MOTOR VEHICLE
ECHANGEUR AIR / AIR DU MOTEUR TURBO D'UN VEHICULE

(30) Priorität: 02.10.2003 DE 10346540
(43) Veröffentlichungstag der Anmeldung: 21.06.2006
(73) Patentinhaber: Behr GmbH & Co. KG, 70469 Stuttgart (DE)
(72) Erfinder: HENDRIX, Daniel, 70374 Stuttgart (DE)
(74) Vertreter: Mantel, Berthold Friedrich
(86) Internationale Anmeldenummer: PCT/EP2004/010876
(87) Internationale Veröffentlichungsnummer: WO 2005/033489

(56) Entgegenhaltungen:
- EP-A- 1 336 736
- US-A- 5 152 144
- PATENT ABSTRACTS OF JAPAN Bd. 009, Nr. 055 (M-362), 9. März 1985 (1985-03-09) -& JP 59 190425 A (MITSUBISHI HEAVY IND LTD), 29. Oktober 1984 (1984-10-29)
- PATENT ABSTRACTS OF JAPAN Bd. 008, Nr. 274 (M-345), 14. Dezember 1984 (1984-12-14) -& JP 59 145325 A (TOUYOU RADIATOR KK), 20. August 1984 (1984-08-20)
- PATENT ABSTRACTS OF JAPAN Bd. 011, Nr. 082 (M-571), 12. März 1987 (1987-03-12) -& JP 61 237998 A (TOYO RADIATOR KK), 23. Oktober 1986 (1986-10-23)
- PATENT ABSTRACTS OF JAPAN Bd. 011, Nr. 234 (M-611), 30. Juli 1987 (1987-07-30) -& JP 62 046194 A (TOYO RADIATOR KK), 28. Februar 1987 (1987-02-28)

## Beschreibung

Die Erfindung betrifft einen Ladeluftkühler eines Kraftfahrzeuges nach dem Oberbegriff des Patentanspruches 1.

Ladeluftkühler für Kraftfahrzeuge sind bekannt; sie dienen der Abkühlung der durch einen Kompressor oder Turbolader komprimierten Verbrennungsluft, um eine bessere Füllung der Zylinder, d. h. einen besseren Liefergrad zu erhalten. Für Kraftfahrzeuge kommen in der Regel luftgekühlte Ladeluftkühler zum Einsatz, wie sie z. B. durch die DE-A 198 57 435 oder die DE-A 199 62 861 der Anmelderin bekannt wurden. Der Ladeluftkühler weist üblicherweise einen Wärmeübertragerblock oder ein so genanntes Netz auf, welches aus Rohren, in der Regel Flach- oder Rechteckrohren besteht, zwischen denen Wellrippen zur Vergrößerung der Wärmeaustauschfläche angeordnet sind. Die Rohre sind mit ihren Rohrenden in Rohrböden gehalten. Rohre, Rippen und Rohrböden bestehen aus Aluminiumwerkstoffen und werden miteinander verlötet. Auf die Rohrböden werden so genannte Luftkästen aufgesetzt, die als Verteiler oder Sammelkästen für die Ladeluft fungieren. Auch diese Luftkästen können aus einem Aluminiumwerkstoff bestehen, ebenso jedoch aus Kunststoff. In bestimmten Einsatzfällen sind auch flüssigkeitsgekühlte Ladeluftkühler im Einsatz, wobei das Kühlmittel des Kühlkreislaufes der Brennkraftmaschine zur Kühlung der Ladeluft dient. Der Ladeluftkühler eines Kraftfahrzeuges ist üblicherweise vor oder hinter dem Kühlmittelkühler befestigt und häufig Teil eines Kühlmoduls, welches im vorderen Motorraum des Kraftfahrzeuges angeordnet ist.

Bei PKW-Dieselmotoren werden aufgrund der Russbildung im Abgas mehr und mehr Partikelfilter eingesetzt, die in bestimmten Intervallen regeneriert werden müssen. Bei bestimmten Typen von Partikelfiltern ist für die Regenerierung (Russabbrand) eine Anhebung der Abgastemperatur erforderlich, was bei kalten Außentemperaturen oft nicht erreichbar ist. Die Erfindung geht davon aus, dass mit Hilfe einer reduzierten Abkühlung der Ladeluft unter Umständen die erhöhte Abgastemperatur für einen Russabbrand erreichbar ist. Außerdem ist insbesondere bei kalten Umgebungstemperaturen ein beschleunigtes Warmlaufen des Fahrzeugmotors möglich.

Eine derartige reduzierte Abkühlung der Ladeluft kann beispielsweise mit dem Ladeluftkühlern der JP 59 190 425 oder der JP 62 046 194.

Es ist daher Aufgabe der vorliegenden Erfindung, einen Ladeluftkühler der eingangs genannten Art mit Mitteln auszustatten, die bedarfsweise eine reduzierte Abkühlung der Ladeluft gegenüber der standardmäßigen Abkühlung der Ladeluft erlauben.

Diese Aufgabe wird durch die Merkmale des Patentanspruches 1 gelöst. Erfindungsgemäß ist vorgesehen, dass für den Fall der reduzierten Abkühlung eine bestimmte Anzahl von Rohren des Ladeluftkühlers abgesperrt wird, d. h. dass die Ladeluftströmung durch diese Rohre unterbunden wird. Demnach werden beispielsweise nur 10 Prozent bis 30 Prozent der Rohre von Ladeluft durchströmt, was zu einer geringeren Abkühlung der austretenden Ladeluft führt. Damit wird der Vorteil erreicht, dass man - auch bei ungünstigen Außenbedingungen, z. B. niedrigen Außentemperaturen - eine erhöhte Abgastemperatur erhält, die für eine Filterregenerierung bzw. einen Rußabbrand erforderlich ist.

Erfindungsgemäß werden die Rohre, die nicht von Ladeluft durchströmt werden sollen, durch ein Absperrorgan verschlossen, welches in einem der Luftkästen, d.h. ein- oder auslassseitig angeordnet ist. Von Vorteil hierbei ist, dass das Absperrorgan in den Ladeluftkühler integriert ist und nicht gesondert montiert werden muss. Neben der Umgebungstemperatur sind auch der Ladedruck, die Ladelufttemperatur, der Ladeluftmassenstrom, die Motordrehzahl, die Motorlast, der Betriebspunkt des Verdichters, die Fahrgeschwindigkeit oder die Temperatur des Kühlmittels einzeln oder in beliebiger Kombination mögliche Regelgrößen für das Verschließen beziehungsweise für das Absperrorgan möglich. Das Stellorgan ist vorzugsweise aus Metall, insbesondere Aluminium, oder aus Kunststoff hergestellt.

Nach einer weiteren vorteilhaften Ausgestaltung der Erfindung ist der Luftkasten durch eine Quertrennwand in zwei Kammern unterteilt, wobei jeder Kammer ein Teil der Gesamtzahl der Ladeluftrohre zugeordnet ist. Vorzugsweise werden beide Kammern in einem trichterförmigen Kanal (Flaschenhals) zusammengeführt, wo das Absperrorgan angeordnet ist. Letzteres verschließt eine der beiden Kammern, vorzugsweise die mit einer höheren Anzahl von Rohren, wodurch die Ladeluftströmung durch diese Rohre unterbunden wird. Der Vorteil dieser Lösung besteht darin, dass das Absperrorgan kleiner als die abzudeckende Querschnittsfläche der Rohre ausgeführt werden kann, womit auch die Stellkräfte für die Verstellung des Absperrorgans geringer werden. Vorzugsweise ist dieser verengte Kanalquerschnitt rund ausgebildet und die Klappe in ihrem Querschnitt entsprechend angepasst.

Absperrorgane zum Verschließen einer Anzahl von Rohren sind bei Abgaswärmeübertragem bekannt. Beispielsweise wurde durch die DE-A 199 62 863 der Anmelderin ein Abgaswärmeübertrager für eine Abgas-Zusatzheizung bekannt, wobei das Abgas mittels einer "Weiche" entweder durch den Abgaswärmeübertrager oder durch einen Bypass gelenkt wird. Diese Weiche ist als flexibles Stellelement ausgebildet. Andere Formen von Abgasklappen oder Verschlussorganen wurden durch die DE-A 102 03 003 bekannt, wobei auch dieser Abgaswärmeübertrager einen integrierten Bypass mit einer Weiche aufweist und der Abgasstrom entweder durch alle Rohre des Abgaswärmeübertragers oder durch den Bypass geleitet wird. Schließlich wurden durch die DE-C 31 03 198 und die DE-C 32 18 984 Abgaswärmeübertrager für die Beheizung von Kraftfahrzeugen bekannt, wobei der Abgasstrom mittels im Wärmeübertrager angeordneter Klappen durch unterschiedliche Strömungskanäle gelenkt wird. Damit soll die Heizleistung an unterschiedliche Abgasströme angepasst werden.

Nach einer vorteilhaften Ausgestaltung der Erfindung ist die Klappe als vorzugsweise rechteckförmige Klappe mit einer seitlichen Schwenkachse ausgebildet, die im unmittelbaren Bereich der Rohrenden angeordnet ist und somit einen Teil der Rohrenden abdeckt bzw. verschließt. Die Klappe kann relativ einfach im Luftkasten angeordnet und befestigt werden. Bei geöffneter Klappe, d. h. nicht verschlossenen Rohren entsteht durch die Anlage der Klappe an der Wand des Ladeluftkastens kein zusätzlicher Druckabfall für die Standard-Ladeluftkühlung, bei welcher sämtliche Rohre von Ladeluft durchströmt werden.

Gemäß einer Ausführungsform weist die Klappe zumindest eine Aussparung für ein oder mehrere nichtverschließbare Rohre auf. So bleiben gezielt ein oder mehrere Rohre an gewünschten Positionen offen.

Gemäß einer weiteren Ausführungsform ist das Absperrorgan als Drehschieber ausgebildet. Beispielsweise wird eine Wandung, die insbesondere entlang eines Zylinderumfangs angeordnet ist, um eine Achse gedreht und versperrt in einer Stellung einige Rohre, während die Rohre in einer anderen Stellung des Drehschiebers offen sind.

Gemäß einer Ausführungsform ist das Absperrorgan als halbrunde Klappe mit seitlicher oder mittiger Schwenkachse ausgebildet. Unter Umständen ist es möglich, daß sich die Klappe beim Öffnen an eine Wand, insbesondere eine Trennwand anlegt. Dabei ist eine Verringerung eines durch die Klappe hervorgerufenen Strömungswiderstands möglich.

Gemäß einer weiteren Ausführungsform weist das Absperrorgan Abschnitte für die Abdeckung einzelner Rohre, so daß diese Rohre versperrbar sind. Die Abdeckabschnitte sind dabei vorzugsweise gemeinsam verschiebbar und/oder verdrehbar gelagert. Insbesondere sind die Abdeckabschnitte zwischen einer die Rohrenden abdeckenden Stellung und einer gegenüber den Rohrachsen versetzten Stellung verschiebbar. Bei einem anderen Beispiel sind die Abdeckabschnitte auf einer gemeinsamen Achse gelagert, wobei sich die Achse in Längsrichtung einer Rohrreihe erstreckt. Ebenso ist es möglich einzelne Abdeckabschnitte gleichzeitig aus dem Mündungsbereich einzelner Rohre herauszudrehen und zu -schieben.

Gemäß einer Ausführungsform sind einige Rohre vollständig verschließbar. Gemäß weiterer Ausführungsbeispiele sind einzelne Rohre, insbesondere alle Rohre, jeweils nur teilweise verschließbar. Neben dem vollständigen Verschließen einiger Rohre ist es auch möglich, alle Rohre zu verschließen, wobei dann zumindest einige der einzelnen Rohre nur teilweise verschlossen werden, damit der Ladeluftkühler zu jedem Zeitpunkt von Ladeluft durchströmbar ist.

Ausführungsbeispiele der Erfindung sind in der Zeichnung dargestellt und werden im Folgenden näher beschrieben. Es zeigen
- Fig. 1, 1a: ein erstes Ausführungsbeispiel mit einer Schwenkklappe,
- Fig. 2: ein zweites Ausführungsbeispiel mit einer runden Klappe,
- Fig. 3: ein weiteres Ausführungsbeispiel mit einer runden Klappe und einer Trennwand im Luftkasten,
- Fig. 4: eine abgewandeltes Ausführungsbeispiel mit einer Trennwand und einer ausgesparten Klappe,
- Fig. 5: eine perspektivische Darstellung der Ausführung mit Trennwand und halbrunder Klappe,
- Fig. 6: ein Ausführungsbeispiel mit einer Klappe in einer Trennwand,
- Fig. 7a-c: ein Ausführungsbeispiel mit einem Drehschieber,
- Fig. 8a-b: ein Ausführungsbeispiel mit mehreren Abdeckabschnitten,
- Fig. 9: ein Ausführungsbeispiel mit einer Rolljalousie und
- Fig. 10: ein weiteres Ausführungsbeispiel mit Abdeckabschnitten.

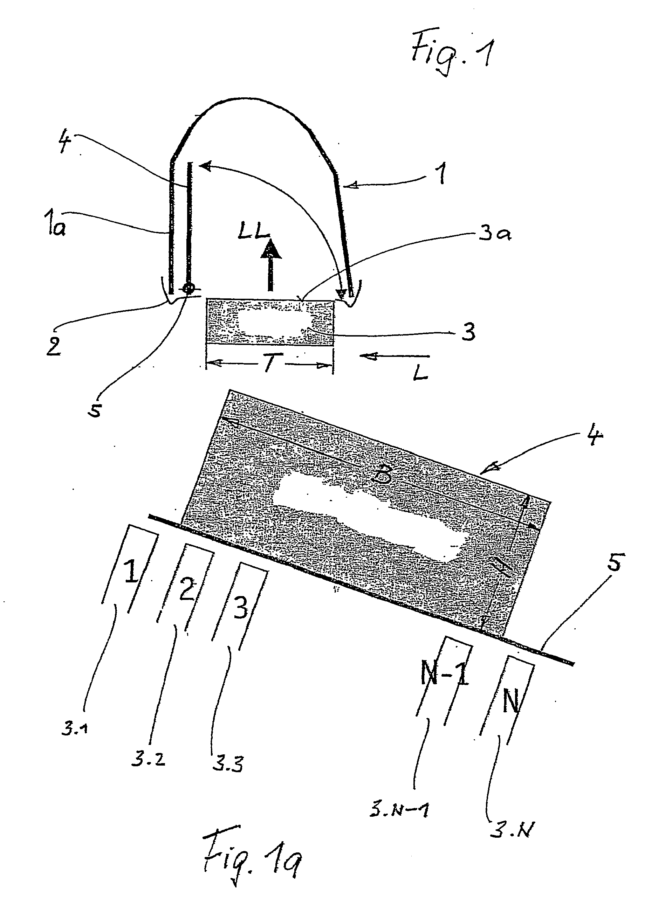

Fig. 1 zeigt in schematischer Darstellung einen austrittsseitigen Luftkasten 1 eines nicht vollständig dargestellten Ladeluftkühlers, der einen weiteren nicht dargestellten eintrittsseitigen Luftkasten aufweist. Der Luftkasten 1, an welchem ein nicht dargestellter Luftauslass angeordnet ist, ist auf einen Rohrboden 2 aufgesetzt und mit diesem verbunden. Der Rohrboden 2 ist vorzugsweise aus einem Aluminiumwerkstoff hergestellt und weist - senkrecht zur Zeichenebene - eine Reihe von nicht näher dargestellten Durchzügen auf, in welche Rohre 3 mit ihren Rohrenden 3a eingesetzt und verlötet sind. Der Luftkasten 1 kann aus einem Kunststoff oder Aluminiumwerkstoff hergestellt sein. Dementsprechend ist die Verbindung mit dem metallischen Rohrboden 2 eine mechanische Bördelverbindung oder eine stoffschlüssige, z. B. Lötverbindung. Die Rohre 3 weisen einen rechteckförmigen Querschnitt auf, dessen lange Seite mit der Tiefe T parallel zur Zeichenebene liegt. Zwischen den Rohren 3 sind nicht dargestellte Wellrippen angeordnet, die mit den Rohren 3 einen Wärmeübertragerblock bzw. ein so genanntes Netz bilden, welches von Umgebungsluft in Richtung eines Pfeils L durchströmt wird. Ein solcher Ladeluftkühler ist üblicherweise im Frontbereich eines nicht dargestellten Motorraumes eines Kraftfahrzeuges angeordnet, in der Regel zusammen mit weiteren Wärmeübertragem, wie z. B. einem Kühlmittelkühler.

Bei anderen Ausführungsformen ist der Ladeluftkühler in der Nähe des Fahrzeugmotors angeordnet.

Im Ladeluftkasten 1 ist eine schwenkbare Klappe 4 angeordnet, deren Schwenkachse 5 sich neben dem Rohrende 3a und im Bereich des Rohrbodens 2 befindet. Die Klappe 4 ist in geöffneter Stellung dargestellt, d. h. in etwa paralleler Lage zu einer Seitenwand 1a des Luftkastens 1. Um das bzw. einzelne Rohre 3 zu verschließen, wird die Klappe 4 um 90 Grad verschwenkt, sodass sie auf dem Rohrende 3a zu liegen kommt und dieses verschließt. Die Betätigung der Klappe 4 und deren Lagerung im Luftkasten 1 sind nicht dargestellt und entsprechen dem eingangs erwähnten Stand der Technik. Die Strömung durch die Ladeluftrohre 3 erfolgt in Richtung des Pfeils LL, d. h. die Klappe 4 wird mit dem Strömungsdruck geöffnet und gegen den Strömungsdruck geschlossen. Eine nicht dargestellte Anordnung der Klappe im ladelufteinstrittsseitigen Luftkasten ist ebenso möglich. Der Pfeil LL müsste dann in die entgegengesetzte Richtung weisen.

**Fig. 1a** zeigt eine vergrößerte Darstellung der Klappe 1 in Relation zu den Rohren 3.1, 3.2, 3.3, 3.N-1 und 3.N, die eine Reihe R bilden. Etwas oberhalb der Rohrenden ist die Klappenachse 5 der Klappe 4 angeordnet und auf nicht dargestellte Weise gelagert. Die Klappe 4 ist rechteckförmig ausgebildet und weist eine Höhe H sowie eine Breite B auf. Die Höhe H entspricht mindestens der Tiefe T (vgl. Fig. 1) der Rohre 3, sodass die Rohrquerschnitte bei geschlossener Klappe abgedeckt sind. Die Breite B ist in Fig. 1a so gewählt, dass die Rohre 3.2 bis 3.N-1 bei geschlossener Klappe 4 abgedeckt sind und lediglich die beiden äußeren Rohre 3.1 und 3.N offen bleiben und von Ladeluft durchströmt werden.

Bei nicht gezeigten Ausführungsbeispielen bleibt nur ein Rohr oder bleiben mehrere, insbesondere mehr als zwei Rohre geöffnet. Diese Rohre sind dabei an einem oder beiden Rändern einer jeweiligen Rohrreihe angeordnet. Es können aber auch Rohre in der Mitte einer Rohrreihe geöffnet bleiben. Hierzu werden mehrere Klappen oder vorzugsweise eine Klappe mit Aussparungen verwendet, wobei die Aussparungen den Rohren zugeordnet sind, die geöffnet bleiben sollen.

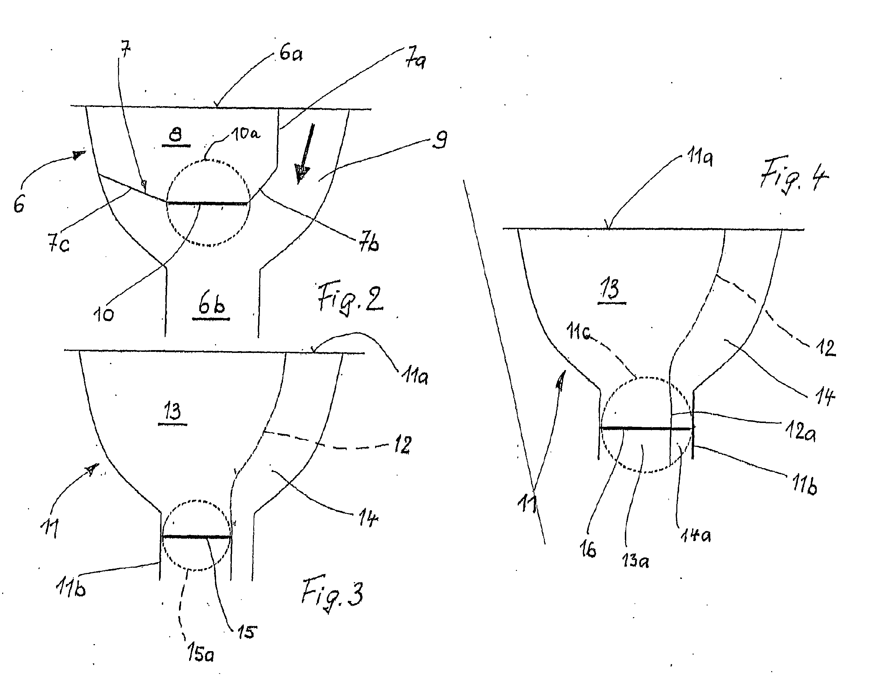

**Fig. 2** zeigt ein weiteres Ausführungsbeispiel der Erfindung mit einem auslassseitigen Luftkasten 6, welcher in einer Ebene 6a mit einem nicht dargestellten Rohrboden bzw. einem Wärmeübertragerblock mit in den Rohrboden mündenden Rohren verbunden ist. Auf der der Ebene 6a abgewandten Seite des Luftkastens 6 ist ein Ladeluftauslass 6b angeordnet. Innerhalb des Ladeluftkastens 6 ist eine abgewinkelte Trennwand 7 angeordnet, welche sich aus drei Bereichen 7a, 7b, 7c zusammensetzt und den Luftkasten 6 in zwei Kammern, nämlich eine erste verschließbare Kammer 8 und eine zweite Durchlasskammer 9 unterteilt. Zwischen den Trennwandbereichen 7b, 7c ist eine runde Schwenkklappe 10 angeordnet, deren Umfang 10a in Durchlassstellung gestrichelt dargestellt ist. Die Verschlussstellung ist durch die durchgezogene Linie 10 dargestellt. In die verschließbare Kammer 8 münden eine erste Anzahl von nicht dargestellten Rohren, und in die Durchlasskammer 9 münden eine zweite Anzahl von nicht dargestellten Rohren, welche - entsprechend der zeichnerischen Darstellung - kleiner als die erste Anzahl ist, d. h. etwa im Verhältnis von 1 : 2 bis 1 : 5.

Bei verschlossener Kammer 8 werden also nur die Rohre von Ladeluft durchströmt, die in die Durchlasskammer 9 münden. Dementsprechend ist die Abkühlung der Ladeluft, die über den Auslass 6b den Ladeluftkühler verlässt, geringer, als wenn die Klappe 10 geöffnet wäre und sämtliche Rohre des Ladeluftkühlers durchströmt würden.

**Fig. 3** zeigt ein abgewandeltes Ausführungsbeispiel der Erfindung mit einem Luftkasten 11, der mit einer Ebene 11a an einen nicht dargestellten Wärmeübertragerblock eines nicht dargestellten Ladeluftkühlers anschließt. Der Luftkasten 11 weist einen Austrittsstutzen 11b und eine gestrichelt dargestellte Trennwand 12 auf, welche sich von der Trennebene 11a bis in den Austrittsstutzen 11b erstreckt. Die Trennwand 12 teilt den Luftkasten 11 in eine erste größere Kammer 13 und eine zweite kleinere Kammer 14, eine so genannte Durchlasskammer, auf. Die Kammer 13 ist im Bereich des Austrittsstutzens 11b durch eine runde Schwenkklappe 15 verschließbar, deren Umfang 15a gestrichelt ist.

Bei geschlossener Klappe 15, welche der durchgezogenen Linie 15 entspricht, ist die Kammer 13, in welche eine erste Anzahl von nicht dargestellten Rohren münden, verschlossen, d. h. die Strömung durch diese Rohre ist unterbrochen. Die in die Durchlasskammer 14 mündenden nicht dargestellten Rohre sind dagegen offen und werden von Ladeluft durchströmt, die somit gekühlt wird. Insgesamt wird bei geschlossener Klappe 15 die durch den Ladeluftkühler strömende Ladeluft weniger stark abgekühlt als bei geöffneter Klappe 15 (Standardkühlung).

**Fig. 4** zeigt eine Abwandlung des Ausführungsbeispieles gemäß Fig. 3 mit dem Luftkasten 11 und der Trennwand 12 sowie dem Austrittsstutzen 11b, der einen kreisförmigen, durch eine gestrichelte Linie 11c in die Zeichenebene geklappten Querschnitt aufweist. Der Querschnitt des Austrittsstutzens 11b ist durch einen Abschnitt 12 a der Trennwand 12 in zwei Teilquerschnitte 13a, 14a unterteilt, wobei der Teilquerschnitt 13a, der mit der Kammer 13 korrespondiert, durch eine runde Schwenkklappe 16 verschließbar ist. Die Schwenkklappe 16 erscheint in der Zeichnung in ihrer geschlossenen Stellung als Volllinie 16 und in ihrer offenen Stellung als gestrichelte Linie 11c, welche durch den Trennwandabschnitt 12a abgeschnitten wird, sodass der Vollkreis 11c (gestrichelte Linie) im Bereich des Teilquerschnittes 14a ausgespart ist. Der Teilquerschnitt 14 a ist somit immer offen. Eine perspektivische Darstellung dieser Ausführungsform ist in der nächsten Figur dargestellt.

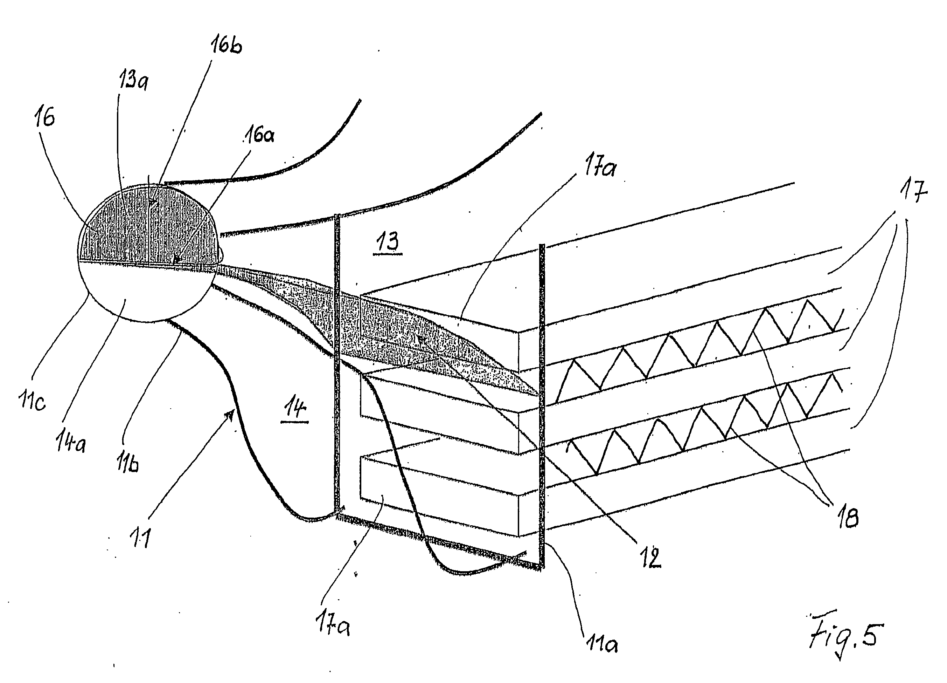

**Fig. 5** zeigt das Ausführungsbeispiel gemäß Fig. 4 in perspektivischer Darstellung, wobei für gleiche Teile gleiche Bezugszeichen verwendet werden. Der Ladeluftkasten 11 schließt mit der Ebene 11a an einen nicht dargestellten Rohrboden an, welcher Rohrenden 17a von Rechteckrohren 17 aufnimmt. Zwischen den Rechteckrohren 17 (Rohre mit etwa recheckförmigem Strömungsquerschnitt) sind Wellrippen 18 angeordnet. Der Luftkasten 11 überdeckt den gesamten nicht vollständig dargestellten Rohrboden und ist durch die Quertrennwand 12 in die Kammern 13 und 14 unterteilt.

Der Luftkasten 11 verengt sich trichterartig zu einem Eintrittsstutzen (Austrittsstutzen) 11b, welcher einen kreisförmigen Querschnitt 11c aufweist. Der Kreisquerschnitt 11c wird durch die Trennwand 12 in den Teilquerschnitt 13a (dunkel angelegt) und den Teilquerschnitt 14a unterteilt. Im Teilquerschnitt 13a ist die halbrunde Schwenkklappe 16 angeordnet, die entweder um eine Klappachse 16a oder alternativ um eine Schwenkachse 16b schwenkbar ist. In beiden Fällen verschließt oder öffnet die Schwenkklappe 16 den Teilquerschnitt 13a, womit die Ladeluftströmung durch die Kammer 13 und die mit ihr verbundenen Rohre unterbunden ist. Die Strömung durch die beiden - in der Zeichnung untenliegenden - Rohre 17, die in die Kammer 14 münden, wird dagegen nicht unterbrochen. Diese Strömungskanäle bleiben immer offen. Die Ansteuerung der Klappe 16 ist nicht dargestellt; sie erfolgt von außen, z. B. in einer Weise, wie sie im eingangs erläuterten Stand der Technik für Abgaswärmeübertrager erläutert ist.

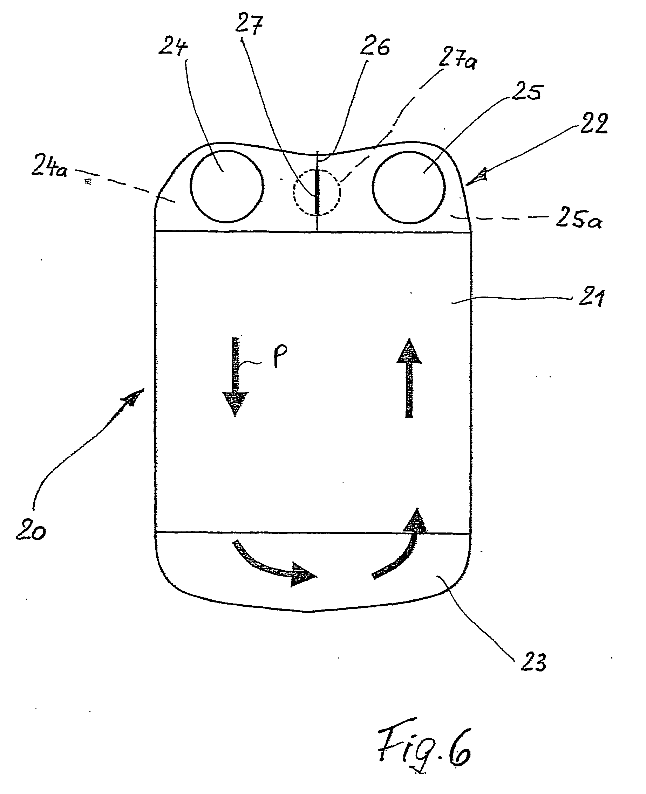

**Fig. 6** zeigt ein weiteres Ausführungsbeispiel der Erfindung für einen Ladeluftkühler 20, welcher einen Wärmeübertragerblock 21, einen oberen Luftkasten 22 und einen unteren Luftkasten 23, einen so genannten Umlenkkasten aufweist. Der obere Luftkasten 22 weist einen Eintrittsstutzen 24 und einen Austrittsstutzen 25 sowie eine zwischen beiden angeordnete Trennwand 26 auf, die den Luftkasten 22 in eine Einlass- und eine Auslasskammer 24a, 25a teilt. Der Ladeluftkühler 20 wird somit U-förmig, d. h. entsprechend den Pfeilen P in zwei Richtungen, von oben nach unten und von unten nach oben durchströmt.

In der Trennwand 26 ist eine runde Schwenkklappe 27 angeordnet, deren Umriss 27a als durchbrochene Linie in die Zeichenebene geklappt ist und deren geöffnete Stellung markiert. Die Schwenkklappe 27, welche auf nicht dargestellte Weise von außen ansteuerbar ist, gibt somit einen Kreisquerschnitt 27a in der Trennwand 26 frei oder verschließt denselben. Bei geschlossener Klappe 27 erfolgt eine standardmäßige Ladeluftkühlung, d. h. zu 100 Prozent. Bei geöffneter Klappe 27 strömt nicht die gesamte Ladeluft entsprechend den Pfeilen P durch den Block 21, sondern nur ein Teilstrom. Der andere Teilstrom geht auf direktem Wege vom Einlassstutzen 24 durch die Öffnung in der Trennwand 26 zum Austrittsstutzen 25. Damit erfolgt nur eine reduzierte Kühlung der Ladeluft, d. h. die aus dem Austrittsstutzen 25 austretende Ladeluft hat eine höhere Ladelufttemperatur als bei Standardkühlung.

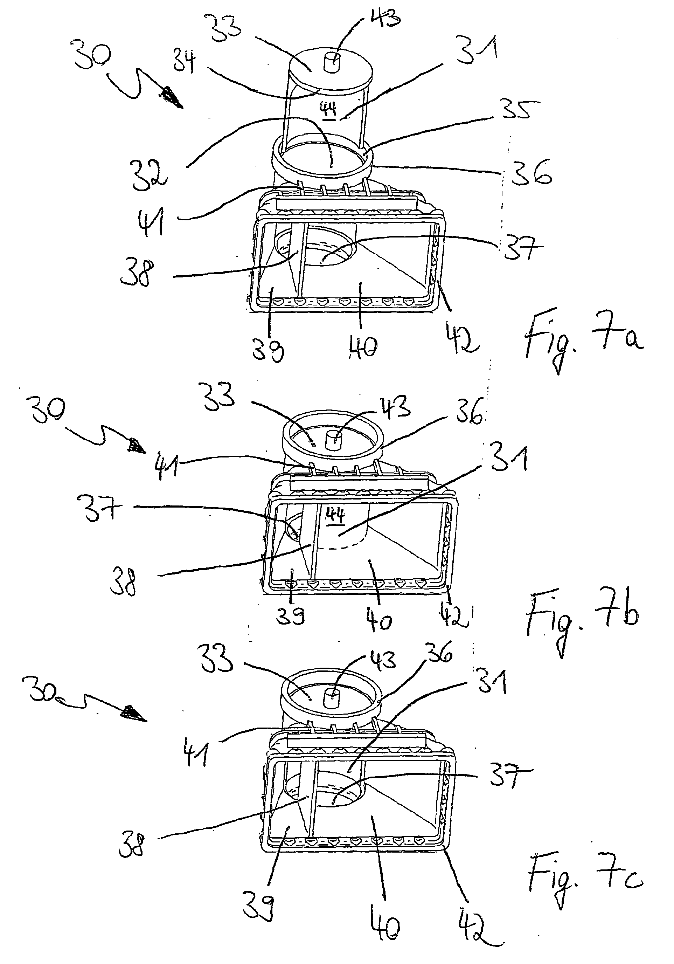

**Fig. 7a****-c** zeigen jeweils einen Sammelkasten 30 eines Ladeluftkühlers, bei dem zur Veranschaulichung die zu einem Rohr-Rippen-Netz des Ladeluftkühlers gewandte Seite nicht dargestellt ist. Ein Drehschieber 31 ist in **Fig. 7a** vor einem Einbau in den Sammelkasten, in **Fig. 7b** in einer ersten Stellung für teilweise Durchströmung des Ladeluftkühlers und in **Fig. 7c** in einer zweiten Stellung für vollständige Durchströmung des Ladeluftkühlers dargestellt.

Der Drehschieber 31 begrenzt im eingebauten Zustand ein zylinderförmiges Teilvolumen des Sammelkastens 30. Ein Teil der Zylindermantelfäche ist dabei durch die Wandung 44 des Drehschiebers 31 abgedeckt, ein übriger Teil der Zylindermantelfläche bleibt frei. Eine Welle 43 in Verlängerung der Zylinderachse des zylinderförmigen Teilvolumens dient als Angriffspunkt für eine Drehung des Drehschiebers 31 um die Zylinderachse, wobei die Drehung beispielsweise durch einen Aktuator wie einen elektrischen Schrittmotor, eine Unterdruck- oder Überdruckdose oder ähnliches angetrieben wird. Durch eine solche Drehung ist eine gezielte Verschiebung der Wandung 44 entlang der Zylindermantelfläche möglich.

Eine runde Öffnung 32 mit einem Rand 36 im Sammelkasten 30 bildet die in den **Fig. 7a****-c** oben liegende Stirnfläche des Zylindervolumens und dient der Einführung des Drehschiebers 31 in den Sammelkasten 30. Eine Stirnwand 33 des Drehschiebers 31 deckt nach dessen Einbau die Öffnung 32 ab und dichtet über die Dichtfläche 34 und die Innenfläche 35 des Randes 36 der Öffnung 32 das Innere des Sammelkastens 30 gegenüber der Umgebung ab.

Eine runde Öffnung 37 im Sammelkasten 30 bildet die in den **Fig. 7a****-c** unten liegende Stirnfläche des Zylindervolumens und dient der Zuströmung von zu kühlender Ladeluft. Aus diesem Grund bleibt die Öffnung 37 offen und wird auch nicht von dem Drehschieber 31 abgedeckt.

Der Sammelkasten 30 weist desweiteren eine Trennwand 38 auf, die das Innere des Sammelkastens 30 in eine erste Teilkammer 39 und eine zweite Teilkammer 40 aufteilt. Die erste Teilkammer 39 ist dabei mit Rohren einer ersten Rohrgruppe des nicht dargestellten Rohr-Rippen-Netzes strömungsverbunden, während die zweite Teilkammer 40 mit Rohren einer zweiten Rohrgruppe des Rohr-Rippen-Netzes strömungsverbunden ist.

Außerdem weist der Sammelkasten 30 Verstärkungsrippen 41 zur Stabilisierung seiner Geometrie während eines Betriebes des Ladeluftkühlers sowie eine Anlage 42 für eine Verbindung mit einem Rohrboden auf, wobei der Rohrboden die Rohrenden des Rohr-Rippen-Netzes aufnimmt.

In einem Normalbetrieb des Ladeluftkühlers (**Fig. 7c**) strömt Ladeluft durch die Öffnung 37 in das zylinderförmige, durch den Drehschieber 31 begrenzte Teilvolumen des Sammelkastens 30 hinein und wird auf dessen Teilkammern 39 und 40 und von dort auf die entsprechenden Rohrgruppen des Rohr-Rippen-Netzes verteilt. Das Verhältnis der Rohranzahl der ersten Rohrgruppe zur Rohranzahl der zweiten Rohrgruppe entspricht dabei in etwa dem Querschnittsverhältnis der Teilkammern 39 und 40 und liegt vorzugsweise bei 1 : 1 bis 1 : 10, besonders bevorzugt bei 1 : 2 bis 1 : 5.

In einem Betrieb des Ladeluftkühlers mit reduzierter Kühlung der Ladeluft (**Fig. 7b**) strömt die Ladeluft dagegen nur in die erste Teilkammer 39, da die zweite Teilkammer 40 durch die Wandung 44 des Drehschiebers 31 versperrt ist. Der Drehschieber wird zu diesem Zweck mit Hilfe der Welle 43 von der Stellung in **Fig. 7c** in die Stellung in **Fig. 7b** gedreht.

Es werden daher nur die Rohre der ersten Rohrgruppe und nicht die Rohre der zweiten Rohrgruppe mit Ladeluft beaufschlagt, so daß die aus der Ladeluft abführbare Wärmeleistung gegenüber dem Normalbetrieb abgesenkt ist. Der Grad dieser Absenkung der Wärmeleistung ergibt sich aus dem Verhältnis der Rohranzahl der ersten Rohrgruppe zur gesamten Rohranzahl des Ladeluftkühlers. Der Anteil der geschlossenen Rohre beträgt vorzugsweise 50% bis 90%, besonders bevorzugt 70% bis 80% der gesamten Rohranzahl.

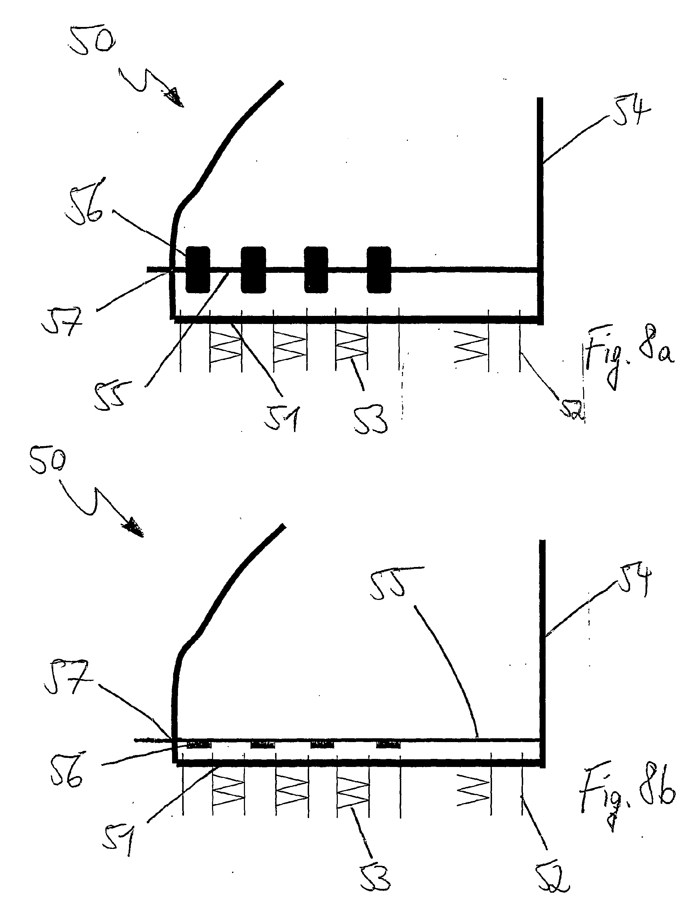

**Fig. 8a****-b** zeigen einen Sammelkasten 50 eines Ladeluftkühlers schematisch im Querschnitt. Der Sammelkasten 50 weist ein Gehäuse 54 und einen Rohrboden 51 mit Öffnungen für die Aufnahme der Enden von Rohren 52 auf, wobei für eine Vergrößerung der wärmeübertragenden Oberfläche Wellrippen 53 zwischen den Rohren 52 angeordnet sind.

Auf einer Welle 55 sind Abdeckabschnitte 56 befestigt, die gegenüber den Enden einiger der Rohre 52 angeordnet sind. Die Welle 55 ist auf einer Seite des Sammelkastens 50 drehbar gelagert und auf dessen anderer Seite durch eine Öffnung 57 aus dem Sammelkasten 50 herausgeführt. Angetrieben wird die Welle 55 wiederum beispielsweise durch einen Aktuator wie einen elektrischen Schrittmotor, eine Unterdruck- oder Überdruckdose.

In einer ersten Stellung (**Fig. 8a**) erstrecken sich die Abdeckabschnitte 56 parallel zu den Rohren 52, so daß Ladeluft, die in den Sammelkasten 50 eintritt, an den Abdeckabschnitten 56 vorbei in alle Rohre 52 einströmen kann. Durch Drehung der Welle 55 um beispielsweise 90° wird eine zweite Stellung (Fig. 8b) erreicht, in der die Abdeckabschnitte 56 einige der Rohre 52 abdecken und damit für die Ladeluft versperren. Es werden daher nur die übrigen (nicht abgedeckten) Rohre mit Ladeluft beaufschlagt, so daß die aus der Ladeluft abführbare Wärmeleistung gegenüber dem Normalbetrieb abgesenkt ist.

Bei einem ähnlichen, nicht dargestellten Ausführungsbeispiel sind Abdeckabschnitte verschiebbar gelagert, insbesondere über eine der Welle 55 ähnliche Welle, die selbst verschiebbar gelagert ist. Von einer die Rohre abdekkenden Position sind die Abdeckabschnitte insbesondere in Längsrichtung der Rohre oder senkrecht dazu in eine die Rohre freigebende Position verschiebbar.

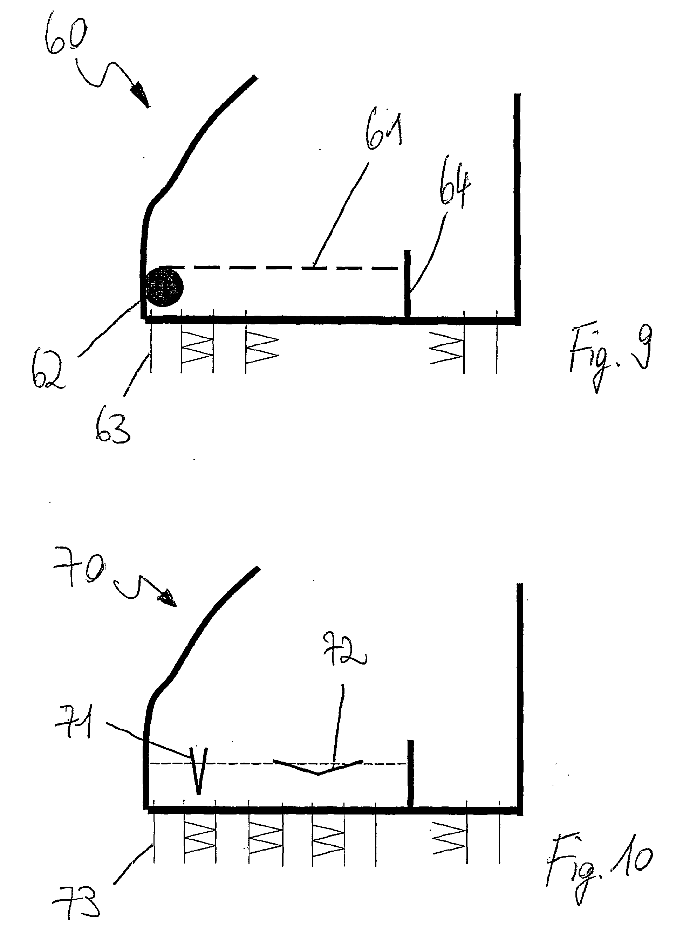

**Fig. 9** zeigt einen ähnlich aufgebauten Sammelkasten 60 ebenfalls in einem schematischen Querschnitt. Im Gegensatz zu dem in **Fig. 8** gezeigten Ausführungsbeispiel werden in **Fig. 9** Abdeckabschnitte 61 nicht auf einer drehbar gelagerten Welle, sondern auf einem verschiebbaren Rahmen, einem Band, einer Kette oder ähnlichem befestigt. Der Rahmen, das Band beziehungsweise die Kette sind, beispielsweise über eine weitere Kette beziehungsweise unmittelbar, an einer Rolle 62 befestigt, so daß über eine Drehung der Rolle 62 eine Verschiebung der Abdeckabschnitte 61 zwischen einer ersten und einer zweiten Stellung erreichbar ist.

In der ersten Stellung werden dabei die Rohrenden 63 durch die Abdeckabschnitte 61 abgedeckt und in der zweiten Stellung kommen die Abdeckabschnitte 61 jeweils neben den Rohrenden 63 zu liegen, so daß in der zweiten Stellung alle Rohre beaufschlagbar sind und die Kühlleistung des Wärmeübertragers in der ersten Stellung gegenüber der zweiten Stellung abgesenkt ist. Eine Trennwand 64 dient einerseits einer Abtrennung der abzudeckenden Rohrenden 63 von den übrigen Rohrenden und andererseits einer Lagerung des Rahmens, des Bandes beziehungsweise der Kette für die Abdeckabschnitte 61.

**Fig. 10** zeigt einen weiteren Sammelkasten 70 in einem schematischen Querschnitt. Abdeckabschnitte 71, 72 sind als zweiflügelige Klappen ausgebildet, die in einer ersten Stellung (71) eine Beaufschlagung aller Rohre 73 zu lassen, in einer zweiten Stellung (72) dagegen einen Teil der Rohre 73 verschließen. Die beiden Flügel eines jeden Abdeckabschnitte 71, 72 werden dabei zum Öffnen aufeinander zubewegt, zum Versperren dagegen voneinander wegbewegt.

Die Erfindung wurde anhand von Beispielen eines Kraftfahrzeug-Ladeluftkühlers erläutert. Es wird jedoch darauf aufmerksam gemacht, daß die Erfindung auch für andere Zwecke geeignet ist.

## Patentansprüche

1. Ladeluftkühler eines Kraftfahrzeuges, bestehend aus einem Wärmeübertragerblock mit von Ladeluft durchströmbaren Rohren (3) und aus mit den Rohren (3) verbundenen Luftkästen (1, 6, 11), die einen Ladelufteinlass und einen Ladeluftauslass aufweisen, **dadurch gekennzeichnet, dass** ein Teil der Rohre verschließbar ist, wobei der Teil der Rohre durch ein Absperrorgan (4, 10, 15, 16, 31) verschließbar ist und im Luftkasten (1, 6, 11) eine Trennwand (7, 12) angeordnet ist, welche den Luftkasten (1, 6, 11) in zwei Kammern (8, 9, 13, 14) mit zwei Strömungsquerschnitten (13a, 14a) unterteilt und dass ein Strömungsquerschnitt (13a) durch das Absperrorgan (4, 10, 15, 16, 31) verschließbar ist und das Absperrorgan (4, 10, 15, 16, 31) als Drehschieber ausgebildet ist.

2. Ladeluftkühler nach Anspruch 1, **dadurch gekennzeichnet, dass** das Absperrorgan (4, 10, 15, 16, 31) im Ladeluftkasten (1, 6, 11) angeordnet ist.

3. Ladeluftkühler nach Anspruch 1 oder 2, **dadurch gekennzeichnet, dass** das Absperrorgan (15, 16, 31) im Bereich des Ladelufteinlasses angeordnet ist.

4. Ladeluftkühler nach Anspruch 1 oder 2, **dadurch gekennzeichnet, dass** das Absperrorgan (10) im Bereich des Ladeluftauslasses (6b) angeordnet ist.

5. Ladeluftkühler nach einem der Ansprüche 1 bis 4, **dadurch gekennzeichnet, dass** das Absperrorgan als schwenkbare Klappe (4) mit einer seitlich angeordneten Schwenkachse (5) ausgebildet ist.

6. Ladeluftkühler nach Anspruch 5, **dadurch gekennzeichnet, dass** die Rohre (3) eine Reihe R bilden und Rohrenden (3a) aufweisen, die in einem Rohrboden (5) des Luftkastens (1) aufgenommen sind, und dass die Schwenkachse (5) in Richtung der Rohrreihe R und neben den Rohrenden (3a) im Bereich des Rohrbodens (5) angeordnet ist.

7. Ladeluftkühler nach Anspruch 6, **dadurch gekennzeichnet, dass** die Klappe (4) insbesondere etwa rechteckförmig ausgebildet ist und in Verschlussstellung auf den Rohrenden (3a) aufliegt.

8. Ladeluftkühler nach Anspruch 7, **dadurch gekennzeichnet, dass** die Klappe (4) zumindest eine Aussparung für ein oder mehrere nichtverschließbare Rohre aufweist.

9. Ladeluftkühler nach Anspruch 1, **dadurch gekennzeichnet, dass** die Kammern (13, 14) und die Trennwand (12) trichterförmig in einen Anschlussstutzen (11b) übergehen, in welchem das Absperrorgan (15, 16) angeordnet ist.

10. Ladeluftkühler nach Anspruch 9, **dadurch gekennzeichnet, dass** das Absperrorgan (15) als runde Klappe mit mittiger Schwenkachse (15) ausgebildet ist.

11. Ladeluftkühler nach Anspruch 9, **dadurch gekennzeichnet, dass** das Absperrorgan als runde, teilweise ausgesparte Klappe (16) mit seitlicher (16a) oder mittiger (16b) Schwenkachse ausgebildet ist.

12. Ladeluftkühler nach Anspruch 9, **dadurch gekennzeichnet, dass** das Absperrorgan als halbrunde Klappe mit seitlicher oder mittiger Schwenkachse ausgebildet ist.

13. Ladeluftkühler nach einem der Ansprüche 2 bis 4, **dadurch gekennzeichnet, dass** das Absperrorgan Abdeckabschnitte für einzelne Rohre aufweist, die gemeinsam verschiebbar und/oder verdrehbar gelagert sind.

14. Ladeluftkühler nach einem der vorhergehenden Ansprüche, **dadurch gekennzeichnet, dass** einige Rohre vollständig verschließbar sind.

15. Ladeluftkühler nach einem der vorhergehenden Ansprüche, **dadurch gekennzeichnet, dass** einige Rohre nur teilweise verschließbar sind.

16. Ladeluftkühler nach einem der vorhergehenden Ansprüche, **dadurch gekennzeichnet, dass** alle Rohre zumindest teilweise verschließbar sind.

## Claims

1. Charge intercooler for a motor vehicle, consisting of a heat exchanger block with tubes (3) through which charge air can flow and of air boxes (1, 6, 11), which have a charge air inlet and a charge air outlet, **characterised in that** some of the tubes can be closed, wherein the part of the tubes can be closed by a shut-off member (4, 10, 15, 16, 31) and a partition (7, 12) is arranged in the air box (1, 6, 11), which divides the air box (1, 6, 11) into two chambers (8, 9, 13, 14) with two flow cross sections (13a, 14a), and that one flow cross section (13a) can be closed by the shut-off member (10, 15, 16) and that the shut-off member (4, 10, 15, 16, 31) is formed as a rotary slide.

2. Charge intercooler as claimed in claim 1, **characterised in that** the shut-off member (4, 10, 15, 16, 31) is arranged in the charge air box (1, 6, 11).

3. Charge intercooler as claimed in claim 1 or 2, **characterised in that** the shut-off member (15, 16, 31) is arranged in the region of the charge air inlet.

4. Charge intercooler as claimed in claim 1 or 2, **characterised in that** the shut-off member (10) is arranged in the region of the charge air outlet (6b).

5. Charge intercooler as claimed in oner of claims 1 to 4, **characterised in that** the shut-off member is designed as a pivotable flap (4) with a laterally arranged pivot axis (5).

6. Charge intercooler as claimed in claim 5, **characterised in that** the tubes (3) form a row R and have tube ends (3a) which are accommodated in a tube plate (5) of the air box (1), and that the pivot axis (5) is arranged in the direction of the tube row (R) and next to the tube ends (3a) in the region of the tube plate (5).

7. Charge intercooler as claimed in claim 6, **characterised in that** the flap (4) is in particular of approximately rectangular design and, in the closure position, rests on the tube ends (3a).

8. Charge intercooler as claimed in claim 7, **characterised in that** the flap (4) has at least one cutout for one or more non-closable tubes.

9. Charge intercooler as claimed in claim 1, **characterised in that** the chambers (13, 14) and the partition (12) merge in a funnel-shaped manner into a connecting pipe (11b), in which the shut-off member (15, 16) is arranged.

10. Charge intercooler as claimed claims 9, **characterised in that** the shut-off member (15) is designed as a round flap with a central pivot axis (15).

11. Charge intercooler as claimed in claim 9, **characterised in that** the shut-off member (15) is designed as round, partially cut-out flap (16) with a lateral pivot axis (16a) or a central pivot axis (16b).

12. Charge intercooler as claimed in claim 9, **characterised in that** the shut-off member is formed with a lateral or a central pivot axis.

13. Charge intercooler as claimed in one of claims 2 to 4, **characterised in that** the shut-off member has covering sections for individual tubes, mounted such that they can be displaced and/or rotated together.

14. Charge intercooler as claimed in claim 12, **characterised in that** some tubes can be closed completely.

15. Charge intercooler as claimed in one of the preceding claims, **characterised in that** some of the tubes can only be partially closed.

16. Charge intercooler as claimed in one of the preceding claims, **characterised in that** all tubes can be at least partially closed.

## Revendications

1. Refroidisseur d'air de suralimentation d'un véhicule automobile, se composant d'un bloc échangeur de chaleur comportant des tubes (3) traversés par de l'air de suralimentation et se composant de réservoirs à air (1, 6, 11) raccordés aux tubes (3), réservoirs à air qui présentent une entrée d'air de suralimentation et une sortie d'air de suralimentation,
**caractérisé en ce qu'**une partie des tubes peut être obturée, où la partie des tubes, qui peut être obturée, est fermée par un organe d'obturation (4, 10, 15, 16, 31), et une paroi de séparation (7, 12) est disposée dans le réservoir à air (1, 6, 11), paroi de séparation qui divise le réservoir à air (1, 6, 11) en deux chambres (8, 9, 13, 14) comportant deux sections d'écoulement (13a, 14a), et **en ce qu'**une section d'écoulement (13a) peut être fermée par l'organe d'obturation (4, 10, 15, 16, 31), et l'organe d'obturation (4, 10, 15, 16, 31) est configuré comme un tiroir rotatif.

2. Refroidisseur d'air de suralimentation selon la revendication 1, **caractérisé en ce que** l'organe d'obturation (4, 10, 15, 16, 31) est disposé dans le réservoir à air de suralimentation (1, 6, 11).

3. Refroidisseur d'air de suralimentation selon la revendication 1 ou 2, **caractérisé en ce que** l'organe d'obturation (15, 16, 31) est disposé dans la zone de l'entrée d'air de suralimentation.

4. Refroidisseur d'air de suralimentation selon la revendication 1 ou 2, **caractérisé en ce que** l'organe d'obturation (10) est disposé dans la zone de la sortie d'air de suralimentation (6b).

5. Refroidisseur d'air de suralimentation selon l'une quelconque des revendications 1 à 4, **caractérisé en ce que** l'organe d'obturation est configuré comme un volet pivotant (4) comportant un axe de pivotement (5) disposé latéralement.

6. Refroidisseur d'air de suralimentation selon la revendication 5, **caractérisé en ce que** les tubes (3) forment une rangée R et présentent des extrémités tubulaires (3a) qui sont logées dans un plateau à tubes (5) du réservoir à air de suralimentation (1), et **en ce que** l'axe de pivotement (5) est disposé, dans la zone du plateau à tubes (5), en direction de la rangée R de tubes et à proximité des extrémités tubulaires (3a).

7. Refroidisseur d'air de suralimentation selon la revendication 6, **caractérisé en ce que** le volet (4) est configuré, en particulier, en étant à peu près de forme rectangulaire et, en position de fermeture, vient en appui sur les extrémités tubulaires (3a).

8. Refroidisseur d'air de suralimentation selon la revendication 7, **caractérisé en ce que** le volet (4) présente au moins un évidement pour un ou plusieurs tubes ne pouvant pas être fermés.

9. Refroidisseur d'air de suralimentation selon la revendication 1, **caractérisé en ce que** les chambres (13, 14) et la paroi de séparation (12) passent dans une tubulure de raccordement (11b) en forme d'entonnoir, tubulure de raccordement dans laquelle est disposé l'organe d'obturation (15, 16).

10. Refroidisseur d'air de suralimentation selon la revendication 9, **caractérisé en ce que** l'organe d'obturation (15) est configuré comme un volet rond comportant un axe de pivotement central (15).

11. Refroidisseur d'air de suralimentation selon la revendication 9, **caractérisé en ce que** l'organe d'obturation est configuré comme un volet rond (16), partiellement évidé, comportant un axe de pivotement latéral (16a) ou central (16b).

12. Refroidisseur d'air de suralimentation selon la revendication 9, **caractérisé en ce que** l'organe d'obturation est configuré comme un volet demi-rond comportant un axe de pivotement latéral ou central.

13. Refroidisseur d'air de suralimentation selon l'une quelconque des revendications 2 à 4, **caractérisé en ce que** l'organe d'obturation présente des parties de recouvrement pour différents tubes, parties de recouvrement qui sont logées en pouvant être déplacées, ensemble, par coulissement et / ou par rotation.

14. Refroidisseur d'air de suralimentation selon l'une quelconque des revendications précédentes, **caractérisé en ce que** quelques tubes peuvent être complètement obturés.

15. Refroidisseur d'air de suralimentation selon l'une quelconque des revendications précédentes, **caractérisé en ce que** quelques tubes peuvent être obturés seulement de façon partielle.

16. Refroidisseur d'air de suralimentation selon l'une quelconque des revendications précédentes, **caractérisé en ce que** tous les tubes peuvent être au moins partiellement obturés.
